# EUROPÄISCHE PATENTSCHRIFT

(11) **EP 2 085 803 B1**
(45) Veröffentlichungstag und Bekanntmachung des Hinweises auf die Patenterteilung: **20.07.2011**
(21) Anmeldenummer: 09000745.1
(22) Anmeldetag: 21.01.2009
(51) Int. Cl.: G02B 7/18, G02B 1/02

(54) **Temperatur-unempfindliches Spiegelmodul zur Befestigung an einem Strukturelement**
Temperature insensitive mirror module for mounting on a structure
Module de miroir insensible à la température pour montage sur une structure

(30) Priorität: 31.01.2008 DE 102008007060
(43) Veröffentlichungstag der Anmeldung: 05.08.2009
(73) Patentinhaber: Astrium GmbH, 81663 München (DE)
(72) Erfinder: Kersten, Michael, 88682 Salem (DE); Kling, Günther, 88682 Salem (DE); Weimer, Peter, 88677 Markdorf (DE)
(74) Vertreter: Hummel, Adam

(56) Entgegenhaltungen:
- JP-A- 8 068 898
- JP-A- 2004 191 556
- US-A- 5 162 951
- US-A- 5 801 891

## Beschreibung

Die Erfindung betrifft ein Spiegelmodul, welches an einem Strukturelement, z.B. einem Bauteil eines Raumfahrzeugs, befestigt werden soll. Das Spiegelmodul umfasst eine Spiegelanordnung und eine erste Aufnahmevorrichtung zur Halterung der Spiegelanordnung. Zur Befestigung des Spiegelmoduls ist an dem Strukturelement eine zweite Aufnahmevorrichtung aus Invar vorgesehen, welche die erste Aufnahmevorrichtung des Spiegelmoduls haltert. Ein solches Spiegelmodul ist beispielsweise aus der US 5,162,951 bekannt.

Ein solches Spiegelmodul kann beispielsweise im Rahmen des Projekts XEUS der esa (European Space Agency) eingesetzt werden. Um mit einem solchen Spiegelmodul zuverlässig Messungen von Röntgenstrahlen vornehmen zu können, ist es notwendig, das Spiegelmodul von äußeren Kräften, wie z.B. Thermalkräften, für alle denkbar möglichen Lastfälle zu entkoppeln. Ein Spiegelmodul wird hierzu typischerweise über zwei unabhängige, aus Keramik bestehende Halteelemente (sog. Brackets) an dem Strukturelement befestigt. Als Keramik wird das hochgradig spröde Material Cesic verwendet. Auf das Spiegelmodul bzw. auf die Spiegelanordnung einwirkende Kräfte können auf diese Weise jedoch nur abgeschwächt, jedoch nicht vollständig von der Spiegelanordnung ferngehalten werden.

Ein weiteres Spiegelmodul zur Befestigung an einem Strukturelement ist aus der US 5,801,891 bekannt. Das Spiegelmodul umfasst einen Spiegel, der über flexible Biegebereiche mit einem Rahmen aus Invar momentenfrei gekoppelt ist.

Es ist daher Aufgabe der vorliegenden Erfindung, ein Spiegelmodul anzugeben, bei welchem eine Spiegelanordnung des Spiegelmoduls gegen äußere und innere Kräfte, insbesondere Thermalkräfte, für eine Vielzahl von Lastfällen zuverlässig isoliert werden kann.

Diese Aufgabe wird durch ein Spiegelmodul mit den Merkmalen des Patentanspruches 1 gelöst. Vorteilhafte Ausgestaltungen ergeben sich aus den abhängigen Patentansprüchen.

Ein erfindungsgemäßes Spiegelmodul zur Befestigung an einem Strukturelement umfasst eine Spiegelanordnung und eine erste Aufnahmevorrichtung zur Halterung der Spiegelanordnung. Die Spiegelanordnung weist zumindest einen Spiegelstapel auf, wobei der zumindest eine Spiegelstapel jeweils zumindest einen Einzelspiegel aus einem ersten Material umfasst. Erfindungsgemäß ist die erste Aufnahmevorrichtung aus einem zweiten Material gebildet, das einen gleichen Wärmeausdehnungskoeffizienten wie das erste Material aufweist, und bei dem zur Befestigung des Spiegelmoduls an dem Strukturelement eine zweite Aufnahmevorrichtung aus Invar vorgesehen ist, welche die erste Aufnahmevorrichtung des Spiegelmoduls haltert. Das erste Material der Spiegelanordnung und das zweite Material der Aufnahmevorrichtung ist jeweils Silizium.

Die Verwendung von Materialien, welche einen aneinander angepassten Wärmeausdehnungskoeffizienten aufweisen, ergibt für sämtliche Temperaturlastfälle eine spannungsfreie Verbindung der Spiegelanordnung an der ersten Aufnahmevorrichtung. Durch das Vorsehen der zusätzlichen zweiten Aufnahmevorrichtung aus Invar zur Halterung der ersten Aufnahmevorrichtung wird eine isostatisch stabile, thermisch entkoppelte Aufhängung der Spiegelanordnung an dem Strukturelement gewährleistet. Hierdurch resultiert eine vollständige Entkopplung der Spiegelanordnung zu dem Strukturelement, wie z.B. CFK. Hierbei ist eine Entkopplung sowohl thermischer Art als auch gegenüber von außen einwirkenden Lasten sichergestellt. Die Verwendung von Materialien mit angepasstem Wärmeausdehnungskoeffizienten (in dem zu erwartenden Einsatz-Temperaturbereich) für die Spiegelanordnung und die erste Aufnahmevorrichtung gewährleistet einerseits eine zuverlässige Kalibration des Spiegelmoduls bei Raumtemperatur und andererseits den definierten Einsatz am späterem Einsatzort bei z.B. 60 K. Die Verwendung von Invar als Spiegelmodul-Suspensionselement in Gestalt der zweiten Aufnahmevorrichtung reduziert darüber hinaus im Vergleich zu der bislang eingesetzten spröden Keramik Cesic, ein AIV- und Start-Risiko erheblich.

Im Ergebnis wird damit eine vollständige Unabhängigkeit der Leistungsfähigkeit der Spiegelanordnung für alle denkbar auftretenden Temperaturfälle erreicht. Die Verwendung einer zweiten Aufnahmevorrichtung aus Invar als isostatische Aufhängung erlaubt eine risikofreie Befestigung des Spiegelmoduls, wodurch eine hervorragende Isolierung der Spiegelanordnung von äußeren Kräften, wie z.B. Thermalkräften, erzielt wird.

In einer weiteren zweckmäßigen Ausgestaltung ist die Spiegelanordnung mit der ersten Aufnahmevorrichtung verklebt. Die erste Aufnahmevorrichtung ist in einer konkreten Ausgestaltung U-förmig ausgebildet, wobei die Spiegelanordnung an Schenkeln der ersten Aufnahmevorrichtung und einem schenkelverbindenden Flächenabschnitt anliegt. Zweckmäßigerweise erfolgt die Verklebung der Spiegelanordnung mit der ersten Aufnahmevorrichtung nur im Bereich der Schenkel, nicht jedoch im Bereich des Flächenabschnitts.

Gemäß einer weiteren Ausgestaltung ist die zweite Aufnahmevorrichtung mit einer zentral angeordneten Befestigungsvorrichtung der ersten Aufnahmevorrichtung verbunden. Die Verbindung der zweiten Aufnahmevorrichtung mit der ersten Aufnahmevorrichtung erfolgt, insbesondere ausschließlich, auf der Rückseite der Spiegelanordnung (an der ersten Aufnahmevorrichtung). Bei dieser Befestigungsart in der Mitte der zweiten Aufnahmevorrichtung ist die isostatische, thermostabile Aufhängung der Spiegelanordnung gewährleistet. Hierdurch werden Lasten von außen zuverlässig von der Spiegelanordnung entkoppelt.

In einer konkreten Ausbildung umfasst die zentrale Befestigungsvorrichtung einen Befestigungssteg, der in eine Nut der zweiten Aufnahmevorrichtung ragt, wenn die erste und die zweite Aufnahmevorrichtung miteinander verbunden sind, wobei die erste und die zweite Aufnahmevorrichtung im Bereich dieser Elemente verbunden sind. Hierdurch wird eine einfache, zuverlässige Befestigung von erster und zweiter Aufnahmevorrichtung miteinander sichergestellt.

Die zentrale Befestigungsvorrichtung umfasst ferner eine Anlagefläche, welche sich quer zu dem Befestigungssteg erstreckt, mit welchem die zweite Aufnahmevorrichtung verbunden ist. Das Vorsehen der Anlagefläche ermöglicht eine definierte Vergrößerung der Verbindungsfläche von erster und zweiter Aufnahmevorrichtung.

Um Kippmomente abzufangen, ist ferner vorgesehen, dass die erste Aufnahmevorrichtung an dem Flächenabschnitt Abstützungen aufweist, welche an jeweiligen Abschnittsflächen mit der zweiten Aufnahmevorrichtung verbunden sind.

Die Befestigung von erster von zweiter Aufnahmevorrichtung aneinander erfolgt bevorzugt durch eine Verklebung.

In einer weiteren zweckmäßigen Ausgestaltung ist die zweite Aufnahmevorrichtung hufeisenförmig ausgebildet und liegt an dem Flächenabschnitt der ersten Aufnahmevorrichtung an. Optional ist die zweite Aufnahmevorrichtung zumindest abschnittsweise mit dem Flächenabschnitt der ersten Aufnahmevorrichtung verbunden.

Es ist ferner vorgesehen, dass zwischen der ersten und der zweiten Aufnahmevorrichtung im Bereich der Schenkel der ersten Aufnahmevorrichtung ein Spalt gebildet ist. Dies bedeutet, dass die Seitenwände bzw. Schenkel der hufeisenförmigen zweiten Aufnahmevorrichtung nicht mit der ersten Aufnahmevorrichtung verbunden sind und somit in diesem Bereich von der ersten Aufnahmevorrichtung entkoppelt sind.

Um eine Torsions- und Biegesteifigkeit der zweiten Aufnahmevorrichtung gewährleisten zu können, ist weiter vorgesehen, dass die zweite Aufnahmevorrichtung im Querschnitt als geschlossenes Vierkantprofil ausgebildet ist.

In einer weiteren konkreten Ausgestaltung umfasst die Spiegelanordnung zwei in einem definierten Winkel zueinander orientierte Spiegelstapel. Jeder der Spiegelstapel umfasst hierbei 45 Einzelspiegel mit Porenoptik aus Silizium.

Die Erfindung wird nachfolgend weiter anhand eines in den Figuren beschriebenen Ausführungsbeispiels erläutert. Es zeigen:
- Fig. 1: eine perspektivische Darstellung eines an einer zweiten Aufnahmevorrich- tung angeordneten erfindungsgemäßen Spiegelmoduls,
- Fig. 2: eine Draufsicht auf die in Fig. 1 dargestellte Anordnung,
- Fig. 3: eine Explosionsdarstellung des Spiegelmoduls und der zweiten Aufnahme- vorrichtung aus Fig. 1, und
- Fig. 4: eine Explosionsdarstellung des Spiegelmoduls und der zweiten Aufnahme- vorrichtung aus Fig. 1 von unten.

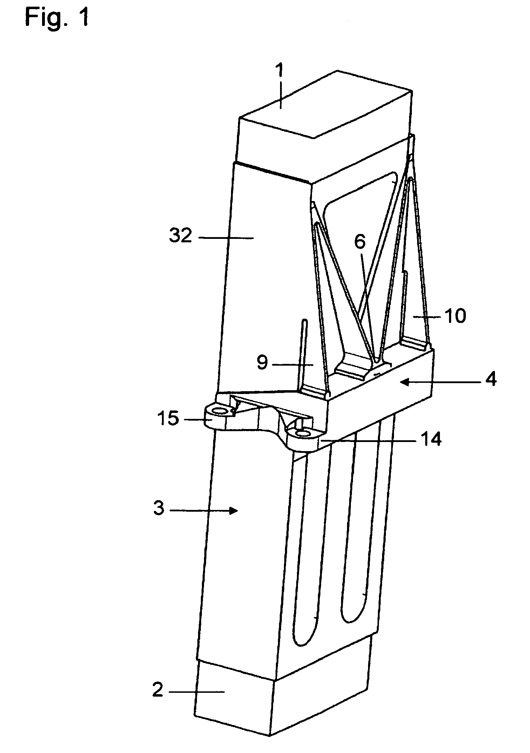

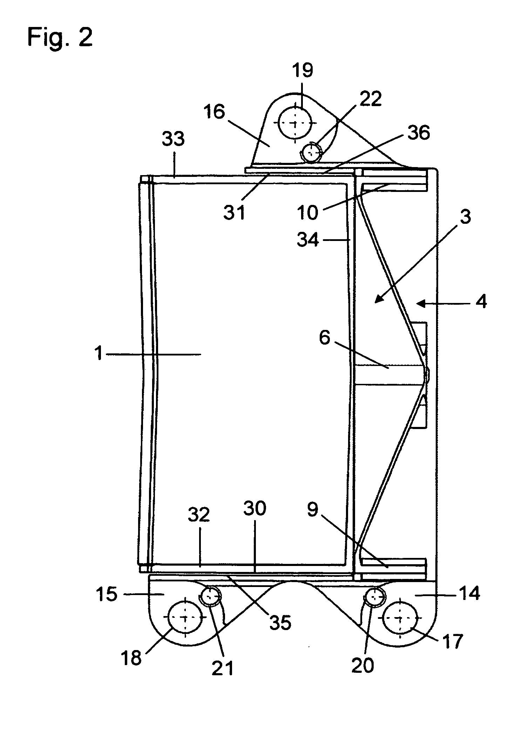

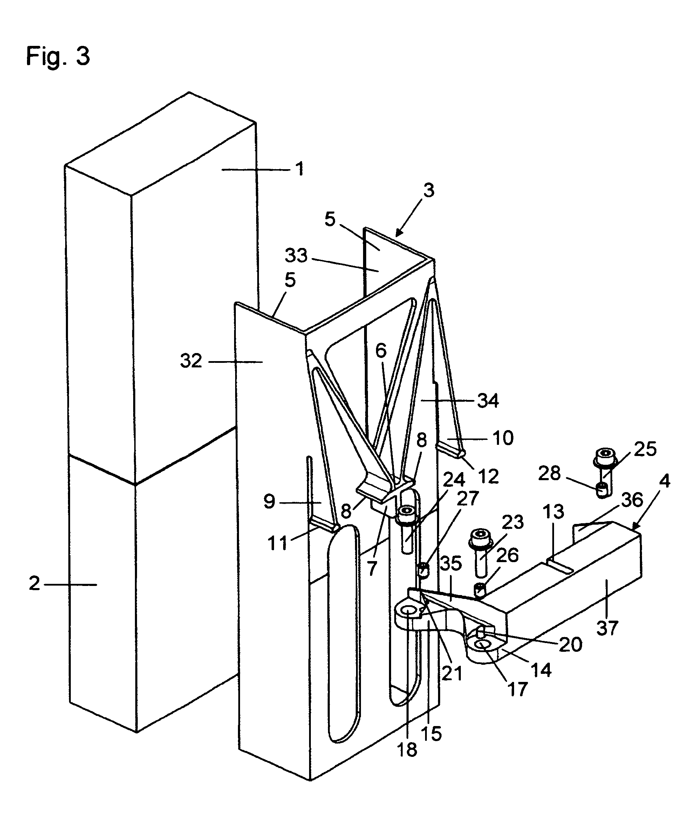

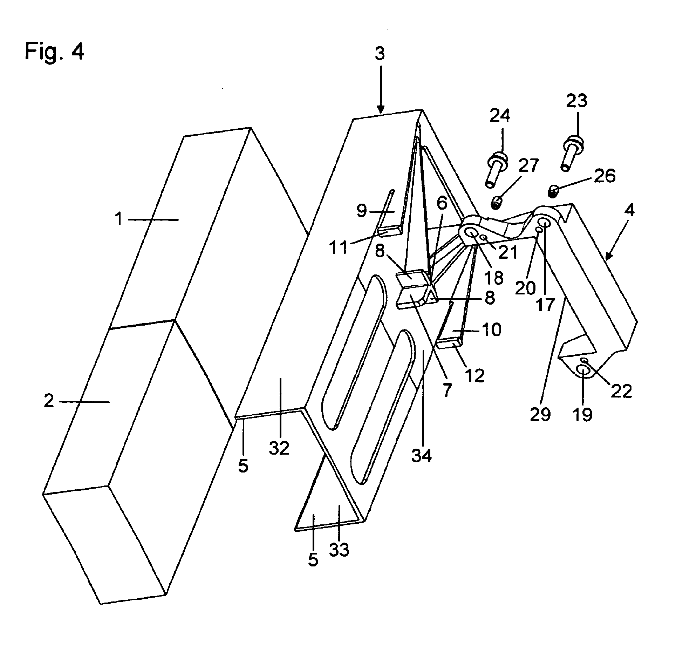

Die Figuren 1 bis 4 zeigen ein erfindungsgemäßes Spiegelmodul zur Befestigung an einem (in den Figuren nicht dargestellten) Strukturelement eines Raumfahrzeugs. Das Spiegelmodul umfasst eine Spiegelanordnung mit zwei Spiegelstapeln 1, 2. Jeder der Spiegelstapel 1, 2, welche auch als Spiegel-Stacks bezeichnet werden, umfasst z.B. jeweils 45 Einzelspiegel mit einer Porenoptik. Jeder Einzelspiegel und damit der Spiegelstapel 1, 2 sind aus Silizium gefertigt. Die zwei in einem definierten Winkel zueinander orientierten Spiegelstapel 1, 2 sind an einer ersten Aufnahmevorrichtung 3 befestigt. Wie insbesondere aus der Draufsicht aus Fig. 2 gut hervorgeht, ist die erste Aufnahmevorrichtung 3 im Querschnitt U-förmig ausgebildet, wobei die Spiegelstapel 1, 2 jeweils an Schenkeln 32, 33 sowie an einem die Schenkel verbindenden Flächenabschnitt 34 anliegen. Eine Verbindung der Spiegelstapel 1, 2 mit der ersten Aufnahmevorrichtung 3 erfolgt im Bereich der Schenkel 32, 33 unter Verwendung eines Klebers. Die erste Aufnahmevorrichtung ist ebenfalls aus Silizium gefertigt, um einen zu dem Material der Spiegelstapel 1, 2 angepassten Wärmeausdehnungskoeffizienten bereitzustellen, so dass eine identische Längenausdehnung dieser beiden Bauteile für alle Temperaturlastfälle gewährleistet ist. Die erste Aufnahmevorrichtung 3 ist aus dem Silizium integralgefräst.

Wie aus den perspektivischen Darstellungen der Figuren 1, 3 und 4 gut zu erkennen ist, umfasst die erste Aufnahmevorrichtung 3 an dem Flächenabschnitt 34 auf der rückwärtigen Seite eine zentral angeordnete Befestigungsvorrichtung 6 (zentrale Befestigungsvorrichtung), von welcher sich ein Befestigungssteg 7 erstreckt. Quer zu dem Befestigungssteg 7 erstreckt sich eine Anlagefläche 8. An den jeweils äußeren Rändern des Flächenabschnitts 34 sind Abstützungen 9, 10 angeordnet, welche jeweils eine Abstützfläche 11, 12 aufweisen, welche in einer Ebene mit der Anlagefläche 8 liegen. Die Abstützungen 9, 10 sind zumindest teilweise durch einen Schlitz von dem Flächenabschnitt 34 der ersten Aufnahmevorrichtung 3 beabstandet, so dass diese eine gewisse Flexibilität quer zur Ebene des Flächenabschnitts 34 aufweisen.

Die erste Aufnahmevorrichtung 3 mit den daran angeordneten Spiegelstapeln 1, 2 wird an der zentralen Befestigungsvorrichtung, insbesondere dem Befestigungssteg 7, mit einer entsprechend ausgestalteten zweiten Aufnahmevorrichtung 4 verbunden. Die zweite Aufnahmevorrichtung 4 wird aus Invar, einer Eisen-NickelLegierung, gebildet, welche die Eigenschaft besitzt, sehr kleine oder zum Teil negative Wärmeausdehnungskoeffizienten zu haben.

Die zweite Aufnahmevorrichtung 4 ist hufeisenförmig ausgebildet (vgl. Draufsicht in Fig. 2), wobei die Abmaße der äußeren Aufnahmevorrichtung 4 an die Abmaße der U-förmigen ersten Aufnahmevorrichtung 3 angepasst sind. Ein Schenkel 35, 36 verbindender Steg 37 ist im Querschnitt als geschlossenes Vierkantprofil ausgebildet, wodurch die zweite Aufnahmevorrichtung torsions- und biegesteif ist. Im Bereich des Befestigungsstegs 7 der zentralen Befestigungsvorrichtung der ersten Aufnahmevorrichtung 3 weist der Steg 37 der zweiten Aufnahmevorrichtung 4 eine Nut 13 auf, in welche der Befestigungssteg 7 ragt, so dass nach dem Zusammenfügen von erster und zweiter Aufnahmevorrichtung 3, 4 der Steg 37 an dem Flächenabschnitt 34 zur Anlage gelangt. Eine mechanische Verbindung von erster und zweiter Aufnahmevorrichtung 3, 4 erfolgt zwischen dem Befestigungssteg 7 und der korrespondierenden Nut 13 sowie den Abstützflächen 11, 12 und dem Steg 37. Optional kann auch eine Verbindung zwischen der Anlagefläche 8 und der Oberseite des Stegs 37 hergestellt sein. Die Verbindung erfolgt durch Verklebung.

Die Anlagefläche 8 weist eine Breite von ca. 1,5 cm auf und dient als Anlage- und gegebenenfalls Klebefläche zu der zweiten Aufnahmevorrichtung 4, d.h. dessen Steg 37. Durch die zentrale Verbindung der ersten Aufnahmevorrichtung 3 mit der zweiten Aufnahmevorrichtung 4 mit einer vorzugsweise maximalen Klebelänge von ca. 2 cm ist die Gefahr von zu hohen Schubspannungen, welche durch unterschiedliche Längenausdehnungskoeffizienten zwischen Silizium und Invar bedingt sind, selbst bei hohen Temperaturschwankungen minimiert.

Die Abstützungen 9, 10 dienen zum Auffangen von Kippmomenten, wobei deren Abstützflächen 11, 12 ebenfalls mit dem Steg 37 der zweiten Aufnahmevorrichtung 4 verklebt sind. Einer unterschiedlichen Längenausdehnung in Querrichtung wird durch entsprechende Biegeweichheit der seitlich geschlitzten Abstützungen 9, 10 Rechnung getragen.

Die Schenkel 35, 36 der zweiten Aufnahmevorrichtung 4 sind nicht mit den Schenkeln 32, 33 der ersten Aufnahmevorrichtung 3 verbunden. Vielmehr ist zwischen jeweiligen Schenkeln 32, 35 bzw. 33, 36 ein Spalt 30 bzw. 31 gebildet.

Eine Lastanbindung der ersten Aufnahmevorrichtung mit der zweiten Aufnahmevorrichtung 4 zu der zentralen Befestigungsvorrichtung 6, welche den zentralen Anbindepunkt darstellt, erfolgt lediglich über das geschlossene Vierkantprofil, d.h. den Steg 37, der zweiten Aufnahmevorrichtung 4. Die Anbindung erfolgt hierbei auf der Rückseite der Spiegelstapel 1, 2.

Die vorgeschlagene Befestigung des Spiegelmoduls an einem Strukturelement eines Raumfahrzeugs stellt eine isostatische, thermostabile Aufhängung mit Zentrum in der Mitte der zweiten Aufnahmevorrichtung 4 dar. Lasten von außen werden dadurch zuverlässig von den Spiegelstapeln 1, 2 entkoppelt.

Die Anbindung eines derart vorbereiteten Spiegelmoduls erfolgt über an den Schenkeln 35, 36 ausgebildete Befestigungsflansche 14, 15, 16. In jedem der Befestigungflansche 14, 15, 16 ist eine Bohrung 17 bzw. 18 bzw. 19 vorgesehen, so dass die zweite Aufnahmevorrichtung 4 mittels Befestigungsschrauben 23, 24, 25 an dem in den Figuren nicht dargestellten Strukturelement befestigt werden kann. Das Vorsehen zweier Befestigungsflansche 14, 15 an dem Schenkel 35 und eines Befestigungsflansches 16 an dem Schenkel 36 stellt eine sog. 3-Punkt-Lagerung dar.

Vor der endgültigen Befestigung der Spiegelstapel 1, 2 können diese lateral über die Bohrungen 17, 18, 19 und bezüglich ihrer Winkelausrichtung über Kugeldruck-Feingewindeschrauben ausgerichtet werden. Hierzu sind in den Befestigungsflanschen 14, 15, 16 Feingewindebohrungen 20, 21, 22 vorgesehen, in welche die Kugeldruckschrauben 26, 27, 28 zur Ausrichtung eingedreht werden können.

Bei dem beschriebenen Spiegelmodul ist eine vollständige Entkopplung der Spiegel-Aufhängung, d.h. der ersten Befestigungsvorrichtung 3, zu dem Strukturelement, wie z.B. CFK, durch das isostatische Zwischenschalten der zweiten Aufnahmevorrichtung aus Invar sichergestellt. Dies gilt sowohl gegenüber thermischen wie auch von außen einwirkenden, mechanischen Lasten. Die Verwendung von identischem Material für die Spiegelstapel 1, 2 und erster Aufnahmevorrichtung 3 sowie Invar als Material für die isostatische Aufhängung vermittels der zweiten Aufnahmevorrichtung 4 gewährleistet eine zuverlässige Kalibration der Optik bei Raumtemperaturumgebung und gleichfalls definierte Bedingungen an deren späterem Einsatzort bei z.B. 60 K. Hierdurch wird eine vollständige Unabhängigkeit der Leistungsfähigkeit der Spiegelstapel 1, 2 für alle auftretenden Temperaturfälle erreicht. Die Verwendung einer zweiten Aufnahmevorrichtung 4 aus Invar als isostatische Aufhängung erlaubt eine risikofreie Befestigung der Spiegelstapel 1, 2 und stellt eine hervorragende Isolierung der Spiegelstapel gegenüber äußeren Kräften dar.

### Bezugszeichenliste

- 1: Spiegelstapel
- 2: Spiegelstapel
- 3: erste Aufnahmevorrichtung
- 4: zweite Aufnahmevorrichtung
- 5: Seitenwand der ersten Aufnahmevorrichtung
- 6: zentrale Befestigungsvorrichtung
- 7: Befestigungssteg
- 8: Anlagefläche
- 9: Abstützung
- 10: Abstützung
- 11: Abstützfläche
- 12: Abstützfläche
- 13: Nut
- 14: Befestigungsflansch
- 15: Befestigungsflansch
- 16: Befestigungsflansch
- 17: Bohrung
- 18: Bohrung
- 19: Bohrung
- 20: Feingewindebohrung
- 21: Feingewindebohrung
- 22: Feingewindebohrung
- 23: Befestigungsschraube
- 24: Befestigungsschraube
- 25: Befestigungsschraube
- 26: Kugeldruckschraube
- 27: Kugeldruckschraube
- 28: Kugeldruckschraube
- 29: Anlagefläche
- 30: Spalt
- 31: Spalt
- 32: Schenkel
- 33: Schenkel
- 34: Flächenabschnitt
- 35: Schenkel
- 36: Schenkel
- 37: Steg

## Patentansprüche

1. Spiegelmodul zur Befestigung an einem Strukturelement mit einer Spiegelanordnung und mit einer ersten Aufnahmevorrichtung (3) zur Halterung der Spiegelanordnung, wobei zur Befestigung des Spiegelmoduls an dem Strukturelement eine zweite Aufnahmevorrichtung (4) aus Invar vorgesehen ist, welche die erste Aufnahmevorrichtung (3) des Spiegelmoduls haltert, **dadurch gekennzeichnet, dass**
die Spiegelanordnung zumindest einen Spiegelstapel (1, 2) aufweist, wobei der zumindest eine Spiegelstapel (1, 2) jeweils zumindest einen Einzelspiegel aus einem ersten Material umfasst, wobei die erste Aufnahmevorrichtung (3) aus einem zweiten Material gebildet ist, das einen gleichen Wärmeausdehnungskoeffizienten wie das erste Material aufweist und wobei das erste Material der Spiegelanordnung und das zweite Material der ersten Aufnahmevorrichtung (3) Silizium sind.

2. Spiegelmodul nach Anspruch 1, bei dem die Spiegelanordnung mit der ersten Aufnahmevorrichtung (3) verklebt ist.

3. Spiegelmodul nach einem der vorherigen Ansprüche, bei dem die erste Aufnahmevorrichtung (3) U-förmig ausgebildet ist, wobei die Spiegelanordnung an Schenkeln (32, 33) der ersten Aufnahmevorrichtung (3) und einem die Schenkel (32, 33) verbindenden Flächenabschnitt (34) anliegt.

4. Spiegelmodul nach Anspruch 2 und 3, bei dem die Verklebung der Spiegelanordnung mit der ersten Aufnahmevorrichtung (3) nur im Bereich der Schenkel (32, 33) erfolgt.

5. Spiegelmodul nach einem der vorherigen Ansprüche, bei dem die zweite Aufnahmevorrichtung (4) mit einer zentral angeordneten Befestigungsvorrichtung (6) der ersten Aufnahmevorrichtung (3) verbunden ist.

6. Spiegelmodul nach einem der vorherigen Ansprüche, bei dem die Verbindung der zweiten Aufnahmevorrichtung (4) mit der ersten Aufnahmevorrichtung (3), insbesondere ausschließlich, auf der Rückseite der Spiegelanordnung erfolgt.

7. Spiegelmodul nach Anspruch 5 oder 6, bei dem die zentrale Befestigungsvorrichtung (6) einen Befestigungssteg (7) umfasst, der in eine Nut (13) der zweiten Aufnahmevorrichtung (4) ragt, wenn die erste und die zweite Aufnahmevorrichtung (3, 4) miteinander verbunden sind, wobei die erste und die zweite Aufnahmevorrichtung (3, 4) im Bereich dieser Elemente verbunden sind.

8. Spiegelmodul nach Anspruch 7, bei dem die zentrale Befestigungsvorrichtung (6) eine Anlagefläche (8) umfasst, welche sich quer zu dem Befestigungssteg (7) erstreckt, mit welchem die zweite Aufnahmevorrichtung (4) verbunden ist.

9. Spiegelmodul nach einem der vorherigen Ansprüche, bei dem die erste Aufnahmevorrichtung (3) an dem Flächenabschnitt Abstützungen (9, 10) aufweist, welche an jeweiligen Abstützflächen (11, 12) mit der zweiten Aufnahmevorrichtung (4) verbunden sind.

10. Spiegelmodul nach einem der vorherigen Ansprüche, bei dem die erste und die zweite Aufnahmevorrichtung (3, 4) miteinander verklebt sind.

11. Spiegelmodul nach einem der vorherigen Ansprüche, bei dem die zweite Aufnahmevorrichtung (4) hufeisenförmig ausgebildet ist und an dem Flächenabschnitt (34) der ersten Aufnahmevorrichtung (3) anliegt, und optional zumindest abschnittsweise mit diesem verbunden ist.

12. Spiegelmodul nach einem der Ansprüche 3 bis 11, bei dem zwischen der ersten und der zweiten Aufnahmevorrichtung (3, 4) im Bereich der Schenkel (32, 33; 35, 36) der ersten Aufnahmevorrichtung (3) ein Spalt (30, 31) gebildet ist.

13. Spiegelmodul nach einem der vorherigen Ansprüche, bei dem die zweite Aufnahmevorrichtung (4) im Querschnitt als geschlossenes Vierkantprofil ausgebildet ist.

14. Spiegelmodul nach einem der vorherigen Ansprüche, bei dem die Spiegelanordnung zwei in einem definierten Winkel zueinander orientierte Spiegelstapel (1, 2) umfasst.

15. Spiegelmodul nach einem der vorherigen Ansprüche, bei dem jeder Spiegelstapel (1, 2) 45 Einzelspiegel mit Porenoptik aus Silizium umfasst.

## Claims

1. Mirror module for fastening on a structural element, having a mirror arrangement and having a first holding device (3) for holding the mirror arrangement, there being provided for fastening the mirror module on the structural element a second holding device (4) made from invar which holds the first holding device (3) of the mirror module, **characterized in that** the mirror arrangement has at least one mirror stack (1, 2), the at least one mirror stack (1, 2) respectively comprising at least one individual mirror made from a first material, the first holding device (3) being formed from a second material which has the same coefficient of thermal expansion as the first material, and the first material of the mirror arrangement and the second material of the first holding device (3) being silicon.

2. Mirror module according to Claim 1, in which the mirror arrangement is cemented to the first holding device (3).

3. Mirror module according to one of the preceding claims, in which the first holding device (3) is of U-shaped design, the mirror arrangement bearing against limbs (32, 33) of the first holding device (3) and against a surface section (34) connecting the limbs (32, 33).

4. Mirror module according to Claims 2 and 3, in which the cementing of the mirror arrangement to the first holding device (3) is performed only in the region of the limbs (32, 33).

5. Mirror module according to one of the preceding claims, in which the second holding device (4) is connected to a centrally arranged fastening device (6) of the first holding device (3).

6. Mirror module according to one of the preceding claims, in which the connection of the second holding device (4) to the first holding device (3) is performed, in particular exclusively, on the rear side of the mirror arrangement.

7. Mirror module according to Claim 5 or 6, in which the central fastening device (6) comprises a fastening web (7) which projects into a groove (13) of the second holding device (4) when the first and the second holding devices (3, 4) are interconnected, the first and the second holding device (3, 4) being connected in the region of these elements.

8. Mirror module according to Claim 7, in which the central fastening device (6) comprises a bearing surface (8) which extends transverse to the fastening device (7) by which the second holding device (4) is connected.

9. Mirror module according to one of the preceding claims, in which the first holding device (3) has on the surface section supporting elements (9, 10) which are connected on respective supporting surfaces (11, 12) to the second holding device (4).

10. Mirror module according to one of the preceding claims, in which the first and the second holding devices (3, 4) are cemented to one another.

11. Mirror module according to one of the preceding claims, in which the second holding device (4) is of horseshoe-shape design and bears against the surface section (34) of the first holding device (3) and is optionally connected to the latter at least in part.

12. Mirror module according to one of Claims 3 to 11, in which a gap (30, 31) is formed between the first and the second holding devices (3, 4) in the region of the limbs (32, 33; 35, 36) of the first holding device (3).

13. Mirror module according to one of the preceding claims, in which the second holding device (4) is designed in cross section as a closed square profile.

14. Mirror module according to one of the preceding claims, in which the mirror arrangement comprises two mirror stacks (1, 2) orientated at a defined angle to one another.

15. Mirror module according to one of the preceding claims, in which each mirror stack (1, 2) comprises 45 individual mirrors with silicon pore optics.

## Revendications

1. Module de miroir pour la fixation à un élément structurel comprenant un agencement de miroir et un premier dispositif de réception (3) pour retenir l'agencement de miroir, un deuxième dispositif de réception (4) en Invar étant prévu pour la fixation du module de miroir sur l'élément structurel, lequel retient le premier dispositif de réception (3) du module de miroir,
**caractérisé en ce que**
l'agencement de miroir présente au moins un empilement de miroirs (1, 2), l'au moins un empilement de miroirs (1, 2) comprenant à chaque fois au moins un miroir individuel formé en un premier matériau, le premier dispositif de réception (3) étant formé en un deuxième matériau qui présente un coefficient de dilatation thermique identique à celui du premier matériau, et le premier matériau de l'agencement de miroir et le deuxième matériau du premier dispositif de réception (3) étant du silicium.

2. Module de miroir selon la revendication 1, dans lequel l'agencement de miroir est collé au premier dispositif de réception (3).

3. Module de miroir selon l'une quelconque des revendications précédentes, dans lequel le premier dispositif de réception (3) est réalisé en forme de U, l'agencement de miroir s'appliquant contre des branches (32, 33) du premier dispositif de réception (3) et contre une portion de surface (34) reliant les branches (32, 33).

4. Module de miroir selon les revendications 2 et 3, dans lequel le collage de l'agencement de miroir au premier dispositif de réception (3) s'effectue uniquement dans la région des branches (32, 33).

5. Module de miroir selon l'une quelconque des revendications précédentes, dans lequel le deuxième dispositif de réception (4) est connecté à un dispositif de fixation (6), disposé centralement, du premier dispositif de réception (3).

6. Module de miroir selon l'une quelconque des revendications précédentes, dans lequel la connexion du deuxième dispositif de réception (4) au premier dispositif de réception (3) s'effectue en particulier exclusivement sur le côté arrière de l'agencement de miroir.

7. Module de miroir selon la revendication 5 ou 6, dans lequel le dispositif de fixation central (6) comprend une nervure de fixation (7) qui pénètre dans une rainure (13) du deuxième dispositif de réception (4), lorsque le premier et le deuxième dispositif de réception (3, 4) sont connectés l'un à l'autre, le premier et le deuxième dispositif de réception (3, 4) étant connectés dans la région de ces éléments.

8. Module de miroir selon la revendication 7, dans lequel le dispositif de fixation central (6) comprend une surface d'appui (8) qui s'étend transversalement à la nervure de fixation (7) à laquelle est connecté le deuxième dispositif de réception (4).

9. Module de miroir selon l'une quelconque des revendications précédentes, dans lequel le premier dispositif de réception (3) présente sur la portion de surface des appuis (9, 10) qui sont connectés au niveau de surfaces d'appui (11, 12) au deuxième dispositif de réception (4).

10. Module de miroir selon l'une quelconque des revendications précédentes, dans lequel le premier et le deuxième dispositif de réception (3, 4) sont collés l'un à l'autre.

11. Module de miroir selon l'une quelconque des revendications précédentes, dans lequel le deuxième dispositif de réception (4) est réalisé en forme de douille et s'applique contre la portion de surface (34) du premier dispositif de réception (3), et est en option au moins en partie connecté à celui-ci.

12. Module de miroir selon l'une quelconque des revendications 3 à 11, dans lequel une fente (30, 31) est formée entre le premier et le deuxième dispositif de réception (3, 4) dans la région des branches (32, 33 ; 35, 36) du premier dispositif de réception (3).

13. Module de miroir selon l'une quelconque des revendications précédentes, dans lequel le deuxième dispositif de réception (4) est réalisé en section transversale sous forme de profilé à quatre pans fermé.

14. Module de miroir selon l'une quelconque des revendications précédentes, dans lequel l'agencement de miroir comprend deux empilements de miroirs (1, 2) orientés suivant un angle défini l'un par rapport à l'autre.

15. Module de miroir selon l'une quelconque des revendications précédentes, dans lequel chaque empilement de miroirs (1, 2) comprend 45 miroirs individuels avec aspect optique poreux en silicium.
